# EUROPEAN PATENT SPECIFICATION

(11) **EP 4 234 977 B1**
(45) Date of publication and mention of the grant of the patent: **11.06.2025**
(21) Application number: 21909778.9
(22) Date of filing: 20.07.2021
(51) Int. Cl.: F16H 3/083

(54) **POWER TRANSMISSION DEVICE**
KRAFTÜBERTRAGUNGSVORRICHTUNG
DISPOSITIF DE TRANSMISSION D'ÉNERGIE

(30) Priority: 23.12.2020 JP 2020213856
(43) Date of publication of application: 30.08.2023
(73) Proprietor: Univance Corporation, Kosai-city, Shizuoka 431-0494 (JP)
(72) Inventor: KATO, Tadahiko, Kosai-City, Shizuoka 4310494 (JP); YAMAUCHI, Yoshihiro, Kosai-City, Shizuoka 4310494 (JP)
(74) Representative: Prüfer & Partner mbB Patentanwälte · Rechtsanwälte
(86) International application number: PCT/JP2021/027190
(87) International publication number: WO 2022/137618

(56) References cited:
- EP-A1- 3 006 781
- WO-A1-2016/152286
- WO-A1-2020/193697
- CN-A- 107 842 564
- JP-A- 2016 080 127
- US-B2- 11 885 412

## Description

### TECHNICAL FIELD

The present invention relates to a power transmission device and, particularly, to a power transmission device in which running-out of torque at the time of shift can be solved.

### BACKGROUND ART

A transmission having at least two sets each made of a drive gear and a driven gear which come into engagement with each other is known. In the technique disclosed in Patent Literature 1, in each of a first shaft to which drive force of a drive source (for example, an engine) is transmitted and a second shaft parallel to the first shaft, at least two sets each made of a drive gear and a driven gear which come into engagement with each other are disposed. A hub arranged adjacent to the drive gear or the driven gear is coupled to the first shaft or the second shaft, and a clutch ring is disposed in the outer periphery of the hub. The drive gear or the driven gear is provided with first dog tooth in an end face in the axial direction. In the clutch ring, second dog tooth which engage with the first dog tooth are provided in the end face in the axial direction.

In a state where the second dog tooth in the clutch ring engage with the first dog tooth in a low-speed gear and torque is transmitted, when the second dog tooth in another clutch ring engage with the first dog tooth in a high-speed gear, thrust in the axial direction is generated in the clutch ring whose second dog tooth engage with the first dog tooth in the low-speed gear whose rotational speed is lower as compared with the high-speed gear. When the clutch ring is pushed toward the axial direction by the thrust, the first dog tooth in the low-speed gear and the second dog tooth in the clutch ring are disengaged, and a high-speed gear is achieved. In such a manner, running-out of torque at the time of shift can be solved.

### CITATION LIST

### Patent Literature

Patent Literature 1: Japanese Unexamined Patent Application Publication No. 2012-127471. Also Document WO 2016/152286 discloses the state of the art.

### SUMMARY OF INVENTION

### Problem to be solved by Invention

The above-described technique, however, has a problem. Since the rotational speed of the first dog tooth and that of the second dog tooth just before engagement of the first dog tooth and the second dog tooth are different, an impact (engagement sound and shock) occurs when the second dog tooth come into engagement with the first dog tooth.

The present invention has been made to solve the problem, and an object of the invention is to provide a power transmission device in which an impact can be reduced while solving running-out of torque at the time of shift.

### Solution for Problem

To achieve the object, a power transmission device of the present invention includes: a friction clutch transmitting/interrupting power between a drive shaft coupled to a drive source and a first shaft; and a transmission to which power is applied by the first shaft. The transmission has: a second shaft disposed in parallel to the first shaft; a fixed gear disposed to one of the first shaft or the second shaft in a relatively unrotatable manner; an idle gear disposed to the other one of the first shaft or the second shaft in a relatively rotatable manner; at least two annular-shaped hubs coupled to the first shaft or the second shaft and arranged adjacent to the idle gear; and a clutch ring disposed to the outer periphery of each of the hubs so as to be able to move in the axial direction and so as not to be able to rotate with respect to the hub. An end face in the axial direction of the fixed gear or the idle gear is provided with a first dog tooth, and an end face in the axial direction of the clutch ring is provided with a second dog tooth which engages with the first dog tooth. At least one of the hub, the clutch ring, the fixed gear, and the idle gear has a thrust generation part which applies thrust in the axial direction to the clutch ring, when the second dog tooth comes into engagement with the first dog tooth, the thrust making another first dog tooth and another second dog tooth separate from each other. When the maximum torque (Nm) of the drive source is set as x and inertia moment (kgm²) of the friction clutch is set as y, y ≤ 6 × 10⁻⁶x is satisfied.

### Effects of Invention

According to a first mode, by the thrust generation part of the transmission, when the second dog tooth of the clutch ring engages with the first dog tooth, thrust in the axial direction which makes another first dog tooth and the second dog tooth of another clutch ring separate from each other is applied to the clutch ring, and a high-speed gear is accomplished. Therefore, running-out of torque at the time of the shift can be solved.

An impact when the second dog tooth engages with the first dog tooth increases as the difference between kinetic energy of a member which engages with the first dog tooth and kinetic energy of a member coupled to the second dog tooth immediately before engagement of the second dog tooth with the first dog tooth is larger. The kinetic energy of a rotating member is proportional to the inertia moment of the member. To the inertia moment of members including the friction clutch coupled to the second dog tooth, the contribution of the inertia moment of the friction clutch is large. The size and the torque capacity of the friction clutch are influenced by the maximum torque of the drive source, and exert an influence on the inertia moment of the friction clutch.

Consequently, by satisfying y ≤ 6 × 10⁻⁶x (where x (kgm²) is the maximum torque of the drive source and y is the inertia moment (Nm) of the friction clutch), the difference between kinetic energy of a member including the friction clutch coupled to the second dog tooth and kinetic energy of a member coupled to the first dog tooth immediately before engagement of the second dog tooth with the first dog tooth is reduced, and kinetic energy released when the first dog tooth engages with the second dog tooth, that is, an impact can be reduced.

According to a second mode, the friction clutch in the first mode is a wet multiplate clutch. Consequently, by making the outside diameter of the clutch plate smaller while assuring the torque capacity, the inertia moment of the friction clutch can be reduced. Therefore, it is advantageous to reduce an impact.

According to a third mode, in the second mode, a first case houses the transmission, and a second case houses the friction clutch. The second case is separated from the first case. Therefore, oil appropriate to lubrication can be filled in the first and second cases.

According to a fourth mode, in the second mode, both of the friction clutch and the transmission are housed in a case. Therefore, the friction clutch and the gear can be lubricated with oil of one kind.

### BRIEF DESCRIPTION OF DRAWINGS

FIG. 1 is a skeleton diagram of a power transmission device in an embodiment of the present invention.
FIG. 2 is a perspective view of a clutch ring.
FIG. 3 is a perspective view of a hub in which the clutch ring is disposed.
FIG. 4 is a partial cross section of a friction clutch.
FIG. 5 is a schematic diagram of a transmission at the time of coast travel of a low-speed stage.
FIG. 6 is a schematic diagram of the transmission at the time of drive travel of a low-speed stage.
FIG. 7 is a schematic diagram of the transmission during shift from the low-speed stage to a high-speed stage.
FIG. 8 is a schematic diagram of the transmission immediately after shift from the low-speed stage to the high-speed stage.
FIG. 9 is a diagram illustrating the relation between maximum torque of the drive source and inertia moment of the friction switch.

### DESCRIPTION OF EMBODIMENTS

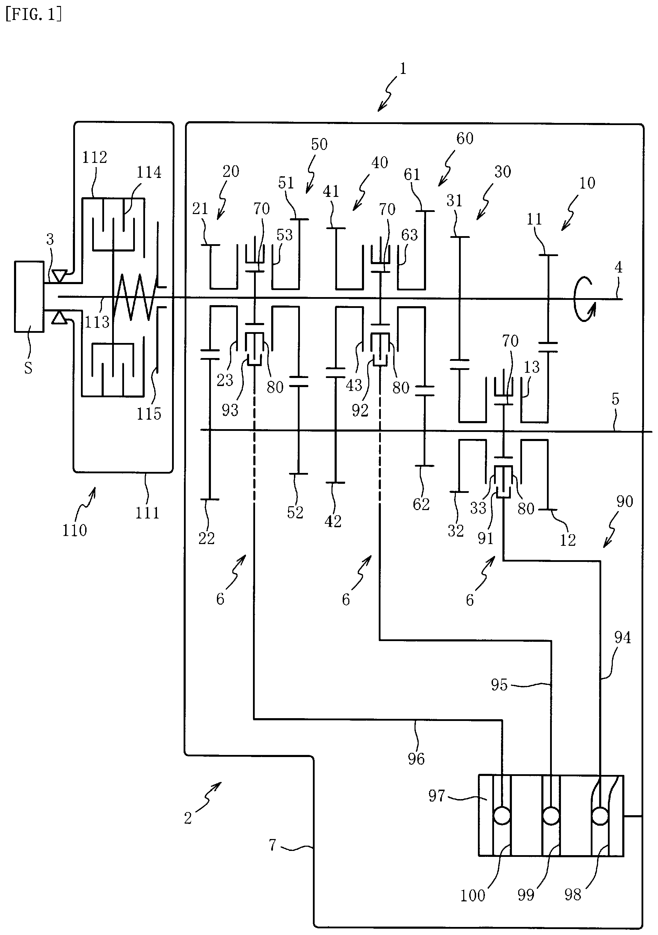

Hereinafter, preferred embodiments of the present invention will be described with reference to the appended drawings. First, a schematic configuration of a power transmission device 1 in an embodiment of the present invention will be described with reference to FIG. 1. FIG. 1 is a skeleton diagram of the power transmission device 1. The power transmission device 1 has a transmission 2 and a friction clutch 110. The transmission 2 has a first shaft 4 to which power is input from a drive shaft 3, and a second shaft 5 disposed in parallel to the first shaft 4. The friction clutch 110 is disposed between the drive shaft 3 and the first shaft 4 to transmit/interrupt power between the drive shaft 3 and the first shaft 4. In the embodiment, the power transmission device 1 is mounted in a vehicle (not illustrated).

The drive shaft 3 is coupled to a drive source S such as an engine. The first shaft 4 and the second shaft 5 support a first-speed gear 10, a second-speed gear 20, a third-speed gear 30, a fourth-speed gear 40, a fifth-speed gear 50, and a sixth-speed gear 60 as a transmission gear of multiple speeds.

The first-speed gear 10 has a drive gear 11 fixed to the first shaft 4 in a relatively unrotatable manner and a driven gear 12 fixed to the second shaft 5 in a relatively rotatable manner while being engaged with the drive gear 11. The second-speed gear 20 has a drive gear 21 fixed to the first shaft 4 in a relatively rotatable manner and a driven gear 22 fixed to the second shaft 5 in a relatively unrotatable manner while being engaged with the drive gear 21. The third-speed gear 30 has a drive gear 31 fixed to the first shaft 4 in a relatively unrotatable manner and a driven gear 32 fixed to the second shaft 5 in a relatively rotatable manner while being engaged with the drive gear 31. The fourth-speed gear 40 has a drive gear 41 fixed to the first shaft 4 in a relatively rotatable manner and a driven gear 42 fixed to the second shaft 5 in a relatively unrotatable manner while being engaged with the drive gear 41. The fifth-speed gear 50 has a drive gear 51 fixed to the first shaft 4 in a relatively rotatable manner and a driven gear 52 fixed to the second shaft 5 in a relatively unrotatable manner while being engaged with the drive gear 51. The sixth-speed gear 60 has a drive gear 61 fixed to the first shaft 4 in a relatively rotatable manner and a driven gear 80 fixed to the second shaft 5 in a relatively unrotatable manner while being engaged with the drive gear 61.

The drive gears 11 and 31 and the driven gears 22, 42, 52, and 62 are fixed gears which are fixed in the axial direction and disposed so as not to be rotatable relative to the axis. The drive gears 21, 41, 51, and 61 and the driven gears 12 and 32 are idle gears which are fixed in the axial direction and disposed so as to be rotatable relative to the axis.

A dog clutch 6 selectively coupling the gears to the first shaft 4 and the second shaft 5 has a hub 70 which is coupled to the first shaft 4 and the second shaft 5, a clutch ring 80 disposed to the hub 70, and a shift device 90 setting the position in the axial direction of the clutch ring 80.

The hub 70 is an annular-shaped member which is fixed in a relatively unrotatable manner to each of the second shaft 5 between the driven gears 12 and 32, the first shaft 4 between the drive gears 21 and 51, and the first shaft 4 between the drive gears 41 and 61. In the end faces in the axial direction of the driven gears 12 and 32 and the drive gears 21, 41, 51, and 61, first dog tooth 13, 33, 23, 43, 53, and 63 projecting in the axial direction toward the hubs 70 are provided, respectively.

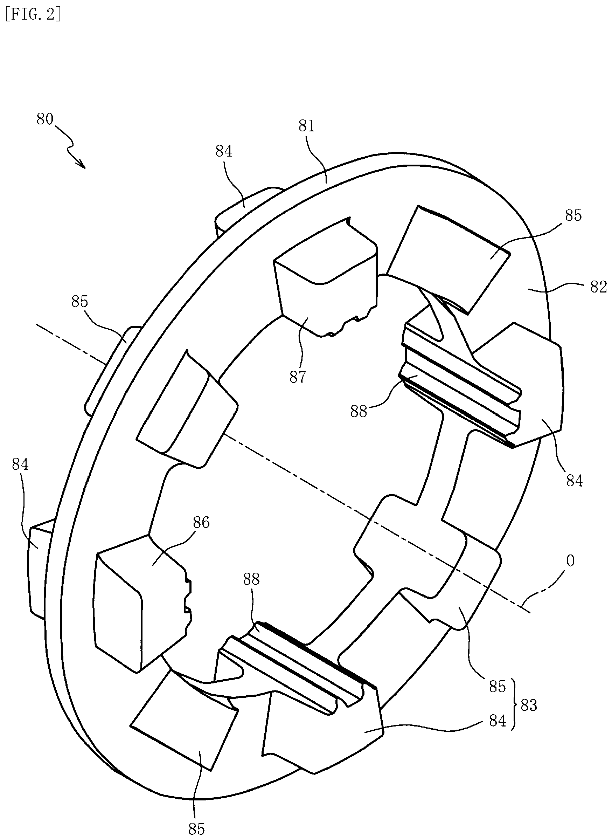

The clutch ring 80 is an annular-shaped member which is attached to the hub 70. The clutch ring 80 is disposed unrotatably with respect to the hub 70 and movably in the axial direction. The clutch ring 80 is provided with second dog tooth 83 (refer to FIG. 2) projecting in the axial direction. When the clutch ring 80 moves in the axial direction and the first dog tooth 13, 33, 23, 43, 53, and 63 and the second dog tooth 83 selectively engage, any of the first-speed gear 10, the second-speed gear 20, the third-speed gear 30, the fourth-speed gear 40, the fifth-speed gear 50, and the sixth-speed gear 60 selectively couples to the first shaft 4 via the hub 70 and the clutch ring 80 to perform gear shift.

The shift device 90 has shift forks 91, 92, and 93 each of which is engaged with the clutch ring 80, shift arms 94, 95, and 96 coupled to the shift forks 91, 92, and 93, respectively, and a column-shaped shift drum 97. The shift drum 97 is fixed to a first case 7 and rotates axially by a motor (not illustrated). End parts of the shift arms 94, 95, and 96 engage in cam grooves 98, 99, and 100, respectively, which are formed in the periphery of the shift drum 97.

The shift drum 97 rotates on the basis of an operation signal of a shift lever (not illustrated) or an accelerator position and a vehicle speed signal or the like according to the operation of an accelerator pedal (not illustrated). When the shift drum 97 rotates, the shift forks 91, 92, and 93 move in the axial direction via the shift arms 94, 95, and 96 guided by the cam grooves 98, 99, and 100. By the shift forks 91, 92, and 93, the clutch rings 80 move in the axial direction.

Referring to FIG. 2, the clutch ring 80 will be described. FIG. 2 is a perspective view of the clutch ring 80. As illustrated in FIG. 2, the clutch ring 80 has a ring 81 extending in an annular shape around the center axis O as a center and the plurality of second dog tooth 83 projecting from an end face 82 in the axial direction of the ring 81 toward both sides in the axial direction. The center axes O of the clutch rings 80 disposed for the first shaft 4 and the second shaft 5 coincide with the center axes of the first shaft 4 and the second shaft 5. Each of the second dog tooth 83 has a third tooth 84 and a fourth tooth 85 whose length in the axial direction is shorter than that of the third tooth 84. Each of the second dog tooth 83 has a third plane 86 facing one side in the circumferential direction and a fourth plane 87, as a plane on the side opposite to the third plane 86, facing the other side in the circumferential direction.

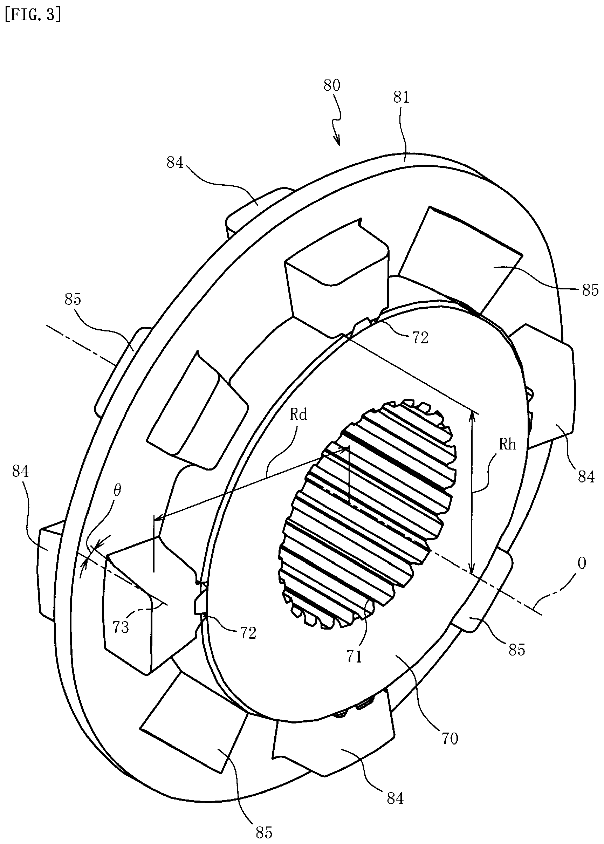

In the second dog tooth 83, the third tooth 84 and the fourth tooth 85 are disposed alternately in the circumferential direction. The third plane 86 is an inclined plane which is inclined with respect to a virtual plane 73 (refer to FIG. 3) parallel to the center axis O. The fourth plane 87 is a plane parallel to the center axis O. In the inner peripheral face of the clutch ring 80, the tooth 88 parallel to the center axis O are formed. In the embodiment, the tooth 88 are formed only on the inside of the third tooth 84, and the tooth 88 extend along the entire length of each of the third tooth 84.

In parts in which the third tooth 84 continue in the inner face of the ring 81 facing the side of the center axis O, the tooth 88 parallel to the center axis O are formed. The tooth 88 continue seamlessly in the ring 81 and the third tooth 84 projected from the end face 82 of the ring 81. It prevents the tooth 88 from being easily broken.

In the embodiment, the tooth 88 are formed only in the second dog tooth 83. The expression "the tooth 88 are formed only in the second dog tooth 83" includes formation of the tooth continued to the tooth 88 in the second dog tooth 83 in the inner face of the ring 81. However, it does not include formation of tooth which are not continued to the tooth 88 of the second dog tooth 83, in the inner face of the ring 81.

FIG. 3 is a perspective view of the hub 70 for which the clutch ring 80 is disposed. In the inner circumferential face of the hub 70, a spline 71 which is coupled to the first shaft 4 or the second shaft 5 (refer to FIG. 1) is formed. In parts in which the tooth 88 of the clutch ring 80 are disposed in the outer circumferential face of the hub 70, grooves 72 parallel to the center axis O are formed. The grooves 72 are formed in the entire length in the axial direction of the hub 70. Since the tooth 88 formed in the clutch ring 80 engage in the grooves 72 of the hub 70, the clutch ring 80 can move in the axial direction with respect to the hub 70, but the clutch ring 80 cannot rotate about the hub 70.

When the tooth 88 engage in the grooves 72 in the hub 70, the clutch ring 80 moves in the axial direction while transmitting torque. As a result, since force is applied to the tooth 88 parallel to the center axis O, even there is a gap in the radial direction between the tooth 88 and the grooves 72, a part extending in the axial direction of the groove 72 comes into contact with a part extending in the axial direction of the tooth 88 and the moment of the clutch ring 80 is suppressed, so that inclination of the clutch ring 80 with respect to the center axis O of the hub 70 can be suppressed.

The shapes of the grooves 72 and the tooth 88 are not particularly limited. In a side view, for example, the grooves 72 and the tooth 88 are properly set to a shape surrounded by curves such as involute curves or rectangular shapes. Obviously, a ball or a rolling member which is rolling in the groove 72 can be provided for the tooth 88, or the tooth 88 can be provided with a ball or a rolling member in the groove 72. It can further reduce the friction between the tooth 88 and the grooves 72.

The third plane 86 of the second dog tooth 83 is inclined so as to become closer to the fourth plane 87 with distance from the ring 81 in the axial direction. The inclination angle of the third plane 86 with respect to the virtual plane 73 parallel to the center axis O is set as θ. A radius Rd of a circle passing the center of gravity of the third plane 86 (the distance between the center axis O and the center of gravity of the third plane 86) is larger than a radius Rh of a reference circle of the groove 72 (the distance between the center axis O and the reference circle of the groove 72) only by the amount of the thickness in the radial direction of the second dog tooth 83.

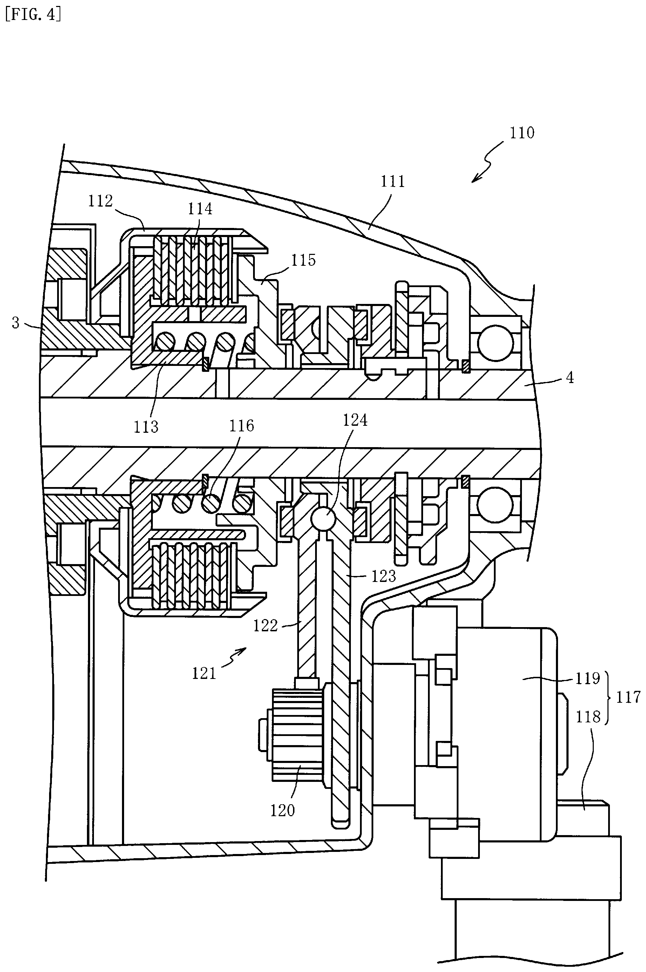

Referring to FIG. 4, the friction clutch 110 will be described. FIG. 4 is a partial cross section of the friction clutch 110. In the embodiment, the friction clutch 110 is a wet multiplate clutch. The friction clutch 110 is housed in a second case 111 filled with lubricating oil and adjusts the torque transmitted from the drive shaft 3 to the first shaft 4. Since the second case 111 in which the friction clutch 110 is housed is separated from the first case 7 (refer to FIG. 1) in which the transmission 2 is housed, oil appropriate for lubrication can be put in each of the first case 7 and the second case 111. For example, gear oil is injected in the first case 7, and the second case 111 is filled with clutch fluid.

The friction clutch 110 has a clutch drum 112 coupled to the drive shaft 3, a clutch hub 113 coupled to the first shaft 4, and a clutch plate 114 disposed between the clutch drum 112 and the clutch hub 113. The clutch plate 114 is supported by the clutch drum 112 and the clutch hub 113 so as to be movable in the axial direction. A pressing member 115 adjusts force of fastening between the clutch drum 112 and the clutch hub 113 by the clutch plate 114. The pressing member 115 is energized to the direction of interrupting the transmission of the torque by a spring 116 disposed between the clutch drum 112 and the clutch hub 113. By the driving of an actuator 117, the pressing member 115 moves in the axial direction of increasing the torque transmitted by the clutch plate 114.

The actuator 117 has a motor 118 and a decelerator 119 decelerating the output of the motor 118. The decelerator 119 is fixed to the second case 111, and the motor 118 is fixed to the second case 111 via a bracket (not illustrated). The torque of the motor 118 is converted to force in the axial direction by a converting mechanism 121.

The converting mechanism 121 is a ball cam capable of steplessly adjusting the fastening power of the clutch plate 114 with precision. The converting mechanism 121 has a first plate 122 on the drive side and a second plate 123 and a ball 124 on the reaction force side. The first plate 122 and the second plate 123 are supported rotatably by the outer periphery of the first shaft 4. The movement in the axial direction with respect to the first shaft 4 of the second plate 123 is regulated, and the first plate 122 is disposed to the pressing member 115 via a thrust bearing. The tip of the first plate 122 engages with a gear 120 connected to the output shaft of the decelerator 119. In cam faces where the first plate 122 and the second plate 123 face each other, a plurality of grooves having predetermined phase differences are formed on the same circle whose center is the rotation center of the cam faces, and the ball 124 is rotatably sandwiched by the cam faces. The ball 124 may be replaced by a roller.

In the case of fastening the friction clutch 110, when the first plate 122 rotates with respect to the second plate 123 via the gear 120 of the decelerator 119, the first plate 122 moves toward the pressing member 115 while being pressed by the ball 124. When the pressing member 115 is pressed to the axial direction by the first plate 122, the pressing member 115 presses the clutch plate 114. On the other hand, in the case of cancelling the fastening of the friction clutch 110, the gear 120 of the decelerator 119 rotates in the reverse direction, so that the first plate 122 moves to the direction away from the pressing member 115, and the pressing member 115 weakens the power of pressing the clutch plate 114.

The friction clutch 110 adjusts the engagement state of the clutch plate 114 at the time of gear shifting of the transmission 2 to adjust the rotation transmitted to the first shaft 4 by the drive shaft 3. When the maximum torque (N·m) of the drive source S is x, and inertia moment (kg·m²) of the friction clutch 110 is y, the friction clutch 110 is set so as to satisfy y ≤ 6 × 10⁻⁶x. The inertia moment of the friction clutch 110 is a total value of the inertia moments of the clutch drum 112, the clutch hub 113, the clutch plate 114, the pressing member 115, and the spring 116.

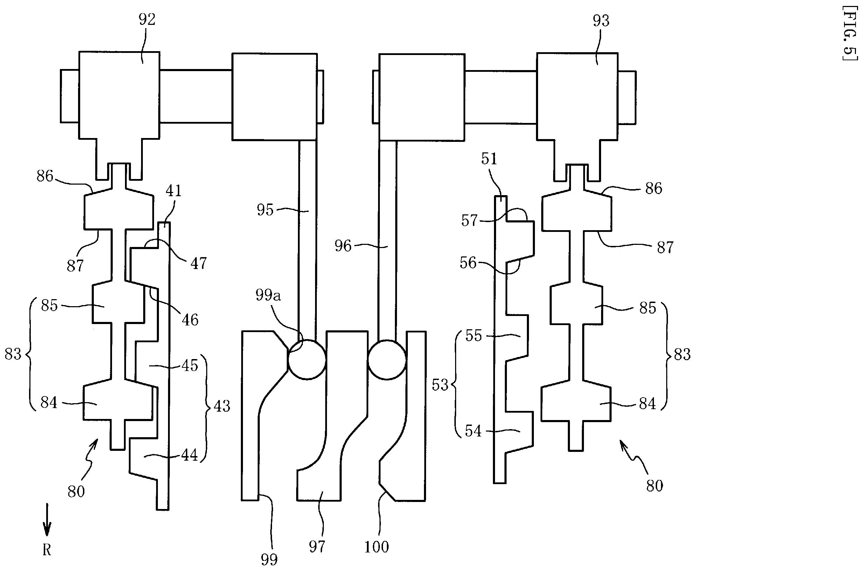

With reference to FIGS. 5 to 8, the operation of the transmission 2 at the time of gear shifting (shifting up) to a higher-speed gear will be described. In the embodiment, as an example, gear shifting from the fourth-speed gear 40 to the fifth-speed gear 50 will be described. Since operations of gearshifting to the other gears are similar, an operation of shifting up to another gear and an operation of shifting down to another gear will not be described.

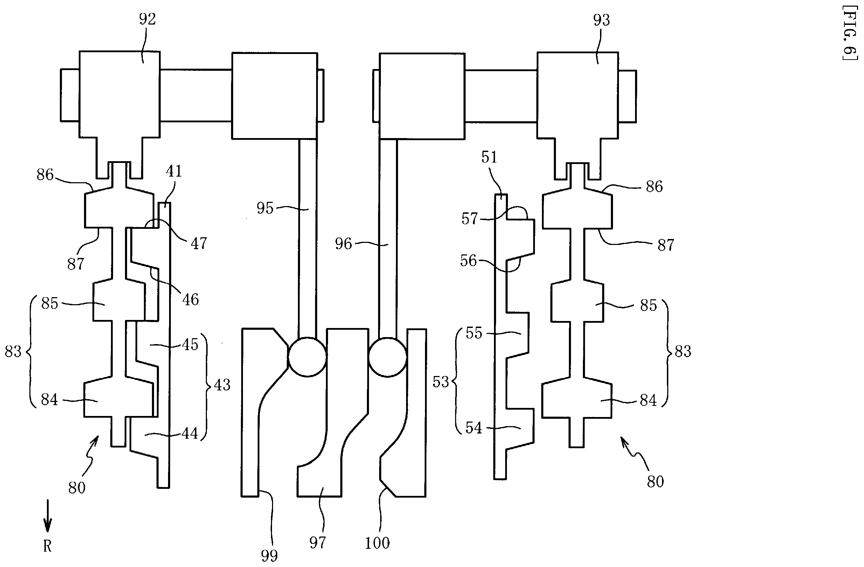

First, referring to FIGS. 5 and 6, the operation of the transmission 2 at the time of a low-speed gear (fourth-speed gear 40) will be described. FIG. 5 is a schematic diagram of the transmission 2 at the time of coast travel in a low-speed gear (fourth-speed gear 40), and FIG. 6 is a schematic diagram of the transmission 2 at the time of drive travel in a low-speed gear (fourth-speed gear 40). In FIGS. 5 to 8, the rotation direction of the drive gears 41 and 51, the hub 70, and the clutch ring 80 is downward along the plane of paper (the direction of the arrow R) .

As illustrated in FIG. 5, in the drive gear 41, the first dog tooth 43 which engage with the second dog tooth 83 of the clutch ring 80 are formed in the end face in the axial direction of the drive gear 41. The first dog tooth 43 has a first tooth 44 and a second tooth 45 whose length in the axial direction is shorter than the length of the first tooth 44. The first dog tooth 43 has a first plane 46 facing one side of the circumferential direction and a second plane 47 facing the other side of the circumferential direction as a plane on the side opposite to the first plane 46. The first plane 46 is opposed to the third plane 86 of the clutch ring 80. The second plane 47 is opposed to the fourth plane 87 of the clutch ring 80.

Each of the first plane 46 and the third plane 86 is an inclined plane which generates thrust by which the drive gear 41 and the clutch ring 80 separate from each other in the axial direction in accordance with the torque in the direction of making the first plane 46 and the third plane 86 come into contact. The first plane 46 is inclined so as to come closer to the second plane 47 with distance from the drive gear 41. The inclination angle θ of the first plane 46 with respect to the virtual plane 73 (refer to FIG. 3) parallel to the center axis O is the same as the inclination angle θ of the third plane 86.

The second plane 47 and the fourth plane 87 are planes in which the drive gear 41 and the clutch ring 80 do not separate in the axial direction at the time of transmitting the torque by making the second plane 47 and the fourth plane 87 come into contact with each other. In the embodiment, the second plane 47 is a plane parallel to the center axis O.

In the drive gear 51, the first dog tooth 53 which engage with the second dog tooth 83 in the clutch ring 80 are formed in the end face in the axial direction of the drive gear 51. The first dog tooth 53 has a first tooth 54 and a second tooth 55 whose length in the axial direction is shorter than the length of the first tooth 54. The first dog tooth 53 has a first plane 56 facing one side of the circumferential direction and a second plane 57 facing the other side of the circumferential direction as a plane on the side opposite to the first plane 56. The first plane 56 is opposed to the third plane 86 of the clutch ring 80. The second plane 57 is opposed to the fourth plane 87 of the clutch ring 80.

Each of the first plane 56 and the third plane 86 is an inclined plane (thrust generation part) which generates thrust by which the drive gear 51 and the clutch ring 80 separate from each other in the axial direction in accordance with the torque in the direction of making the first plane 56 and the third plane 86 come into contact. The first plane 56 is inclined so as to come closer to the second plane 57 with distance from the drive gear 51. The inclination angle θ of the first plane 56 with respect to the virtual plane 73 (refer to FIG. 3) parallel to the center axis O is the same as the inclination angle θ of the third plane 86.

The second plane 57 and the fourth plane 87 are planes in which the drive gear 51 and the clutch ring 80 do not separate in the axial direction at the time of transmitting the torque by making the second plane 57 and the fourth plane 87 come into contact with each other. In the embodiment, the second plane 57 is a plane parallel to the center axis O.

As illustrated in FIG. 5, at the time of fourth-speed travel, the shift fork 92 becomes closer to the drive gear 41 of the fourth-speed gear 40 by the cam groove 99 in the shift drum 97 and the shift arm 95, and the second dog tooth 83 in the clutch ring 80 engage with the first dog tooth 43 in the drive gear 41. At this time, the tooth 88 in the clutch ring 80 engage with the grooves 72 in the hub 70, and the clutch ring 80 moves in the axial direction. Since the tooth 88 are formed on the inside of the second dog tooth 83 (third tooth 84), as compared with the case where the tooth 88 are formed only on the inside of the ring 81, the length in the axial direction of the tooth 88 can be assured. As a result, when the clutch ring 80 moves in the axial direction, the clutch ring 80 can be prevented from easily inclined with respect to the hub 70. On the other hand, in the fifth-speed gear 50, the second dog tooth 83 in the clutch ring 80 and the first dog tooth 53 in the drive gear 51 are separated in the axial direction by the shift drum 97.

At the time of coast travel in which the power is transmitted from the driven gear 42 of the fourth-speed gear 40 (refer to FIG. 1) to the drive gear 41, the drive gear 41 rotates faster than the clutch ring 80, so that the first plane 46 of the drive gear 41 comes into contact with the third plane 86 of the clutch ring 80. At this time, a gap in the circumferential direction is generated between the second plane 47 and the fourth plane 87.

The first plane 46 and the third plane 86 generate thrust by which the drive gear 41 and the clutch ring 80 separate from each other in the axial direction in accordance with the torque at the time of coasting. However, a top part 99a (regulation part) of the cam groove 99 of the shift drum 97 regulates movement in the axial direction of the shift arm 95 and the shift fork 92, so that engagement between the second dog tooth 83 of the clutch ring 80 and the first do tooth 43 of the drive gear 41 is maintained, and the state where the third plane 86 of the clutch ring 80 is in contact with the first plane 46 of the drive gear 41 is maintained.

As illustrated in FIG. 6, at the time of drive travel in which the power is transmitted from the drive gear 41 is transmitted to the driven gear 42 (refer to FIG. 1), the clutch ring 80 rotates faster than the drive gear 41, so that the fourth plane 87 of the clutch ring 80 comes into contact with the second plane 47 of the drive gear 41. At this time, a gap in the circumferential direction is generated between the first plane 46 and the third plane 86.

At the time of transmitting the torque by making the second plane 47 and the fourth plane 87 come into contact with each other, the drive gear 41 and the clutch ring 80 do not separate in the axial direction, so that jump-out of the gear is prevented by regulation of the movement in the axial direction of the shift arm 95 and the shift fork 92 by the top part 99a of the cam groove 99 of the shift drum 97, friction between the second plane 47 and the fourth plane 87, and the like, and the drive torque is transmitted.

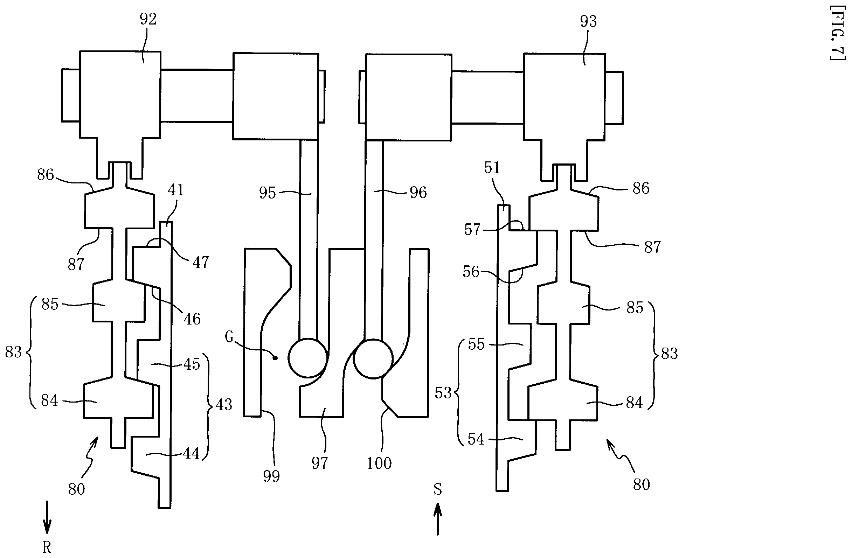

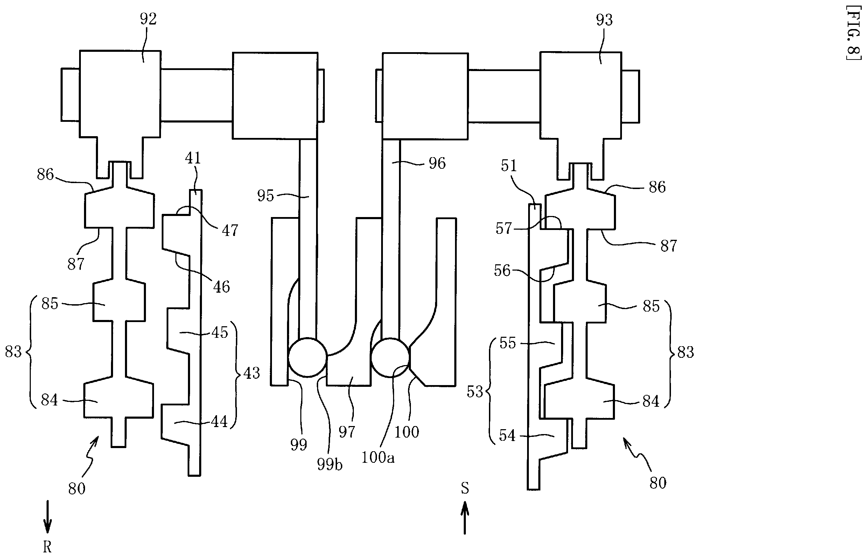

FIG. 7 is a schematic diagram of the transmission 2 during shift from a low-speed gear (fourth-speed gear 40) to a high-speed gear (fifth-speed gear 50), and FIG. 8 is a schematic diagram of the transmission 2 at the time of drive travel in a high-speed gear (fifth-speed gear 50). The arrow S illustrated in FIGS. 7 and 8 denotes the rotation direction at the time of shift-up of the shift drum 97.

As illustrated in FIG. 7, at the time of drive travel when the power is transmitted from the drive gear 41 to the driven gear 42 (refer to FIG. 1), when the shift drum 97 is rotated while the engagement of the friction clutch 110 is kept and shift-up operation to a higher-speed gear (fifth-speed gear 50) is performed, the shift fork 93 comes closer to the drive gear 51 of the fifth-speed gear 50 by the cam groove 100 of the shift drum 97 and the shift arm 96, and the tip of the third tooth 84 in the clutch ring 80 comes into contact with the tip of the first tooth 54 in the drive gear 51. Since the third tooth 84 in the clutch ring 80 is longer than the fourth tooth 85 in the axial direction, engagement between the third tooth 84 of the second dog tooth 83 and the first dog tooth (first tooth 54) in the drive gear 51 can be made easier.

On the other hand, in the fourth-speed gear 40, the top part 99a of the cam groove 99 releases the shift arm 96. Consequently, a gap G by which the clutch ring 80 can be separated in the axial direction from the drive gear 41 is created between the shift arm 96 and the cam groove 99. However, in the case where the power is transmitted from the drive gear 41 to the driven gear 42 (refer to FIG. 1) by making the second plane 47 and the fourth plane 87 come into contact with each other in the fourth-speed gear 40, the thrust which separates the drive gear 41 and the clutch ring 80 in the axial direction does not generated, so that the state where the second dog tooth 83 in the clutch ring 80 and the first dog tooth 43 in the drive gear 41 engage with each other is maintained.

When the first dog tooth 53 (first tooth 54) of the drive gear 51 of the fifth-speed gear 50 engage with the second dog tooth 83 (third tooth 84) of the clutch ring 80 in a state where the drive gear 41 of the fourth-speed gear 40 and the second dog tooth 83 of the clutch ring 80 engage with each other, since the fifth-speed gear 50 rotates faster than the fourth-speed gear 40, the fourth-speed side becomes the coast state, and the fifth-speed side becomes the drive state by internal circulating torque.

The fifth-speed gear 50 is in the drive state where the second plane 57 and the fourth plane 87 are in contact, and the thrust which makes the drive gear 51 and the clutch ring 80 separate in the axial direction is not generated. Consequently, the shift fork 93 comes closer to the drive gear 51 by the cam groove 100 of the shift drum 97 and the shift arm 96, and the engagement between the second dog tooth 83 of the clutch ring 80 and the first dog tooth 53 of the drive gear 51 becomes tighter.

Since the tooth 88 are formed only on the inside of the third tooth 84 in the clutch ring 80, when the third tooth 84 come to engage with the first dog tooth 53, torque is transmitted between the clutch ring 80 and the hub 70 via the first dog tooth 53, the third tooth 84, and the tooth 88. Consequently, as compared with the case where the tooth 88 are not formed on the inside of the third tooth 84 and the tooth 88 are formed on the inside of the fourth tooth 85 and the ring 81, breakage of the ring 81 starting from the corner formed by the third tooth 84 and the ring 81 due to application of the force in the rotation direction when the third tooth 84 and the first dog tooth 53 (first tooth 54) come into engagement with each other can be suppressed.

In addition, as compared with the case where the tooth 88 are formed not only on the inside of the third tooth 84 but also on the inside of the fourth tooth 85 and the ring 81, decrease in the sectional area of the clutch ring 80 due to the tooth 88 can be suppressed. Therefore, durability of the clutch ring 80 can be improved. Further, as compared with the case where the tooth 88 are formed not only on the inside of the third tooth 84 but also on the inside of the fourth tooth 85 and the ring 81, the area of the tooth 88 which rub against the grooves 72 can be reduced, so that friction between the groove 72 and the tooth 88 can be prevented from increasing.

On the other hand, the fourth-speed gear 40 is in the coast state where the first plane 46 and the third plane 86 are in contact with each other. By the inclination angle θ of the first plane 46 and the third plane 86, thrust by which the drive gear 41 and the clutch ring 80 separate in the axial direction is generated according to torque. The tooth 88 formed in the inner peripheral face of the clutch ring 80 engage in the grooves 72 formed in the outer peripheral face of the hub 70 and, by the thrust, the clutch ring 80 moves in the axial direction while transmitting torque only by the amount of the gap G of the cam grooves 99.

As a result, the part extending in the axial direction of the groove 72 comes into contact with the part extending in the axial direction of the tooth 88, so that the clutch ring 80 does not easily tilt with respect to the hub 70, and the moment of the power of the clutch ring 80 can be suppressed. It can suppress friction of the tooth 88 which moves in the axial direction while rubbing against the groove 72. As a result, sound and vibration generated when the drive gear 41 and the clutch ring 80 separate from each other in the axial direction can be suppressed.

It is now set that the inclination angle of the first plane 46 and the third plane 86 is θ, the radius of the circle passing the center of gravity of the third plane 86 is Rd, the radius of the reference circle of the groove 72 is Rh, coefficient of friction between the first plane 46 and the third plane 86 is µd, and coefficient of friction between the groove 72 and the tooth 88 is µh. The hub 70 and the clutch ring 80 are set so as to satisfy tan(θ-µd)/Rd-µh/Rh > 0. By the setting, the drive gear 41 and the clutch ring 80 can be smoothly separated from each other in the axial direction by the internal circulating torque by the thrust in the axial direction according to the inclination angle θ of the first plane 46 and the third plane 86. Therefore, a shock occurring at the time of gear shift can be suppressed.

As illustrated in FIG. 8, when the gear shift to the fifth-speed gear 50 is completed by the shift drum 97, in the fourth-speed gear 40, the top part 99b of the cam groove 99 in the shift drum 97 regulates movement in the axial direction of the shift arm 95 and the shift fork 92. By the regulation, the state where the clutch ring 80 and the drive gear 41 are separated is maintained. In the fifth-speed gear 50, a top part 100a of the cam groove 100 in the shift drum 97 regulates the movement in the axial direction of the shift arm 96 and the shift fork 93, so that engagement between the second dog tooth 83 of the clutch ring 80 and the first dog tooth 53 of the drive gear 51 is maintained.

At the time of drive travel when the power is transmitted from the drive gear 51 to the driven gear 52 (refer to FIG. 1), the clutch ring 80 rotates faster than the drive gear 51, so that the fourth plane 87 of the clutch ring 80 is in contact with the second plane 57 of the drive gear 51. At this time, a gap in the circumferential direction is created between the first plane 56 and the third plane 86.

Since the drive gear 51 and the clutch ring 80 are not apart from each other in the axial direction when torque is transmitted by making the second plane 57 and the fourth plane 87 come into contact with each other, gear jump-out is prevented by regulation of movement in the axial direction of the shift arm 96 and the shift fork 93 by the top part 100a of the cam groove 100 in the shift drum 97, friction between the second plane 57 and the fourth plane 87, and the like, and the drive torque is transmitted.

At the time of coast drive in which power is transmitted from the driven gear 52 (refer to FIG. 1) to the drive gear 51, the drive gear 51 rotates faster than the clutch ring 80, so that the first plane 56 of the drive gear 51 comes into contact with the third plane 86 of the clutch ring 80. At this time, a gap in the circumferential direction is created between the second plane 57 and the fourth plane 87.

The first plane 56 and the third plane 86 generate thrust to separate the drive gear 51 and the clutch ring 80 from each other in the axial direction in accordance with the torque at the time of coasting. However, the top part 100a (regulation part) of the cam groove 100 in the shift drum 97 regulates the movement in the axial direction of the shift arm 96 and the shift fork 93, so that engagement between the second dog tooth 83 in the clutch ring 80 and the first dog tooth 53 in the drive gear 51 is maintained, and the state where the third plane 86 of the clutch ring 80 is in contact with the first plane 56 of the drive gear 51 is maintained.

As described above, in the transmission 2, when the second dog tooth 83 of the clutch ring 80 engage with the first dog tooth 43 and 53 in the two transmission gears (the fourth-speed gear 40 and the fifth-speed gear 50) of different transmission gear ratios at the time of gear shift from a low-speed gear to a high-speed gear, by internal circulating torque, the clutch ring 80 coupled to the low-speed transmission gear (fourth-speed gear 40) having the lower rotational speed as compared with the high-speed transmission gear (fifth-speed gear 50) is pushed in the axial direction by the thrust generated between the first plane 46 and the third plane 86. When the high-speed transmission gear (fifth-speed gear 50) and the clutch ring 80 are coupled, the low-speed transmission gear (fourth-speed gear 40) and the clutch ring 80 are separated and the high-speed gear is accomplished, so that running-out of torque at the time of gear shift can be prevented.

### Example

The present invention will be described more specifically by an example. However, the present invention is not limited to the example.

An examiner made five prototypes in which inertia moments of the friction clutch 110 are different by making the size of the friction clutchs110 different, of the power transmission device 1 in the embodiment. The conditions of the prototypes are the same except for the inertia moments of the friction clutch 110. To the drive shafts 3 of the prototypes, crank shafts of five kinds of engines (drive sources S) of different maximum torques are coupled.

The examiner made a test of starting each of the engines in a state where the friction clutches 110 are disengaged, engaging the friction clutches 110, setting the transmission 2 to the third speed, after that, setting each of the engines to the rotational speed at which the maximum torque is generated, and shifting up to the fourth speed while the friction clutches 110 are kept engaged. The examiner made sensory evaluation on an impact (engagement sound and shock) when the second dog tooth 83 of the clutch ring 80 come into engagement with the first dog tooth 43 of the drive gear 41.

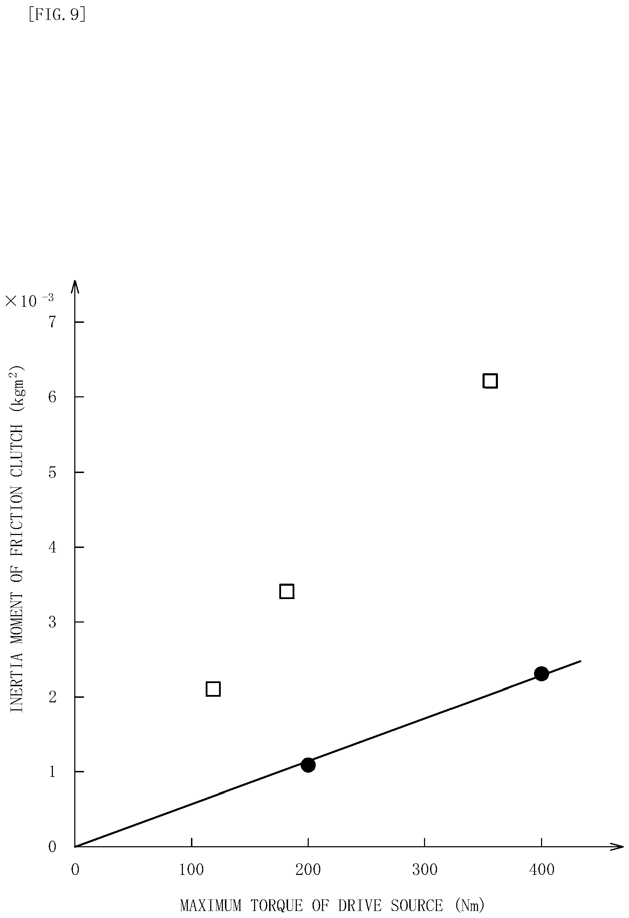

FIG. 9 is a diagram illustrating the relation between the maximum torque of the drive source S, the inertia moment of the friction clutch 110, and an impact. Each of open squares in FIG. 9 indicates a combination by which an impact giving an uncomfortable feeling to the examiner is generated (a combination between the maximum torque of the drive source S and the inertia moment of the friction clutch 110). Each of closed circles in FIG. 9 indicates a combination by which an impact not giving an uncomfortable feeling to the examiner is generated.

The equation of the straight line illustrated in FIG. 9 is y = 6 × 10⁻⁶x where x is the maximum torque (Nm) of the drive source S (engine) and y is the inertia moment (kgm²) of the friction clutch 110. It was made clear by the examination that when y ≤ 6 × 10⁻⁶x is satisfied, the impact at the time of gear shift can be reduced.

The friction clutch 110 when y ≤ 6 × 10⁻⁶x is satisfied is a wet multiplate clutch. Since a wet multiplate clutch can assure torque capacity even when the outside diameter of the clutch plate 114 is small, the inertia moment can be reduced while assuring the torque capacity. Therefore, it is advantageous to reduce an impact at the time of gear shift.

Although the present invention has been described above on the basis of the embodiment, it can be easily assumed that the invention is not limited to the embodiment and various improvements and modifications are possible without departing from the gist of the present invention. For example, the number and disposition of gears of the transmission 2, the shapes of the cam grooves 99 and 100 formed in the shift drum 97, the number and shape of the grooves 72 formed in the hub 70, the number and the shape of the tooth 88 formed in the clutch ring 80, and the like can be properly set.

In the embodiment, the case where the second plane 47 of the first dog tooth 43 provided for the drive gear 41, the second plane 57 of the first dog tooth 53 provided for the drive gear 51, and the fourth plane 87 of the second dog tooth 83 provided for the clutch ring 80 are planes parallel to the center axis O has been described. However, the present invention is not limited to the case. When the second planes 47 and 57 and the fourth plane 87 are in contact to transmit torque, it is sufficient that the resultant force of the component in the axial direction of the force by the torque and the component in the axial direction in the friction force between the second planes 47 and 57 and the fourth plane 87 does not act in the direction of separating the clutch ring 80 from the drive gears 41 and 51. As long as the relation is satisfied, the second planes 47 and 57 and the fourth plane 87 may be inclined with respect to the virtual plane (not illustrated) parallel to the center axis O.

In the embodiment, the case of the thrust generating part of generating thrust which separates the drive gear 41 and the clutch ring 80 in the axial direction in accordance with the torque, by the first plane 46 of the first dog tooth 43 provided for the drive gear 41 and the third plane 86 of the second dog tooth 83 provided for the clutch ring 80 has been described. However, the present invention is not limited to the case. For example, like the transmission described in Japanese Unexamined Patent Application Publication No. 2012-127471, obviously, it is possible to set the inclination angle of each of the first plane 46 and the third plane 86 to almost zero, provide a column-shaped projection for the clutch ring 80 in place of the tooth 88 provided for the clutch ring 80, form a cam groove in a V shape which is inclined with respect to the plane including the center axis O in the peripheral face of the hub 70 in place of the parallel groove 72 provided for the hub 70, and dispose the projection of the clutch ring 80 in the cam groove. Also in the case of using the cam groove in the hub 70 and the projection of the clutch ring 80 as the thrust generating part, function effects similar to those of the embodiment can be realized.

Although the case of mounting the power transmission device 1 in a car has been described in the embodiment, the present invention is not limited to the case. Obviously, the power transmission device 1 can be mounted in a construction machine, an industrial vehicle, an agricultural machine, and the like. In this case as well, an impact (sound) at the time of gear shift can be reduced while preventing running-out of torque at the time of gear shift by the power transmission device 1. Therefore, idling of the first shaft 4 is prevented and the fuel consumption can be also improved.

In the embodiment, the case of separately providing the first case 7 housing the transmission 2 and the second case 111 housing the friction clutch 110 has been described. However, the present invention is not limited to the case. Obviously, it is possible to provide a case obtained by integrating the first case 7 and the second case 111 and house both the transmission 2 and the friction clutch 110 in the case. In this case, for example, by filling the case with high-extreme-pressure gear oil whose base is automatic transmission fluid, the durability of the clutch plate 114 and the gear can be also satisfied.

### Explanation of reference

1 power transmission device
2 transmission
3 drive shaft
4 first shaft
5 second shaft
7 first case
11,31 drive gear (fixed gear)
12,32 driven gear (idle gear)
13,23,33,43,53,63 first dog tooth
21,41,51,61 drive gear (idle gear)
22,42,52,62 driven gear (fixed gear)
56 first plane (thrust generation part)
70 hub
80 clutch ring
83 second dog tooth
86 third plane (thrust generation part)
110 friction clutch
111 second case
S drive source

## Claims

1. A power transmission device (1) comprising:
a friction clutch (110) transmitting/interrupting power between a drive shaft (3) coupled to a drive source (S) and a first shaft (4); and
a transmission (2) to which power is applied by the first shaft (4),
wherein the transmission (2) has:
a second shaft (5) disposed in parallel to the first shaft (4);
a fixed gear (11) disposed to one of the first shaft (4) or the second shaft (5) in a relatively unrotatable manner;
an idle gear (12) disposed to the other one of the first shaft (4) or the second shaft (5) in a relatively rotatable manner;
at least two annular-shaped hubs (70) coupled to the first shaft (4) or the second shaft (5) and arranged adjacent to the idle gear (12); and
a clutch ring (80) disposed to the outer periphery of each of the hubs (70) so as to be able to move in the axial direction and so as not to be able to rotate with respect to the hub (70),
an end face in the axial direction of the fixed gear (11) or the idle gear (12) is provided with a first dog tooth (13),
an end face in the axial direction of the clutch ring (80) is provided with the second dog tooth (83) which engages with the first dog tooth (13),
at least one of the hub (70), the clutch ring (80), the fixed gear (11), and the idle gear (12) has a thrust generation part which applies thrust in the axial direction to the clutch ring (80), when the second dog tooth (83) comes into engagement with the first dog tooth (13), the thrust making another first dog tooth (13) and another second dog tooth (83) separate from each other, and
when the maximum torque (Nm) of the drive source (S) is set as x and inertia moment (kgm²) of the friction clutch (110) is set as y, y ≤ 6 × 10⁻⁶x is satisfied.

2. The power transmission device (1) according to claim 1, wherein the friction clutch (110) is a wet multiplate clutch.

3. The power transmission device (1) according to claim 2, further comprising a first case (7) in which the transmission (2) is housed and a second case (111) in which the friction clutch (110) is housed,
wherein the second case (111) is separated from the first case (7).

4. The power transmission device (1) according to claim 2, further comprising a case in which both the friction clutch (110) and the transmission (2) are housed.

## Patentansprüche

1. Kraftübertragungsvorrichtung (1), umfassend:
eine Reibungskupplung (110), die Kraft zwischen einer Antriebswelle (3), die mit einer Antriebsquelle (S) gekoppelt ist, und einer ersten Welle (4) überträgt/unterbricht; und
ein Getriebe (2), an das Kraft durch die erste Welle (4) angelegt wird,
wobei das Getriebe (2) aufweist:
eine zweite Welle (5), die parallel zu der ersten Welle (4) angeordnet ist;
ein festes Zahnrad (11), das an einer von der ersten Welle (4) oder der zweiten Welle (5) in einer relativ nicht drehbaren Weise angeordnet ist;
ein Leerlaufzahnrad (12), das an der anderen von der ersten Welle (4) oder der zweiten Welle (5) in einer relativ drehbaren Weise angeordnet ist;
mindestens zwei ringförmige Naben (70), die mit der ersten Welle (4) oder der zweiten Welle (5) gekoppelt sind und benachbart zu dem Leerlaufzahnrad (12) angeordnet sind; und
einen Kupplungsring (80), der an dem Außenumfang von jeder der Naben (70) so angeordnet ist, dass er in der Lage ist, sich in der axialen Richtung zu bewegen, und so, dass er nicht in der Lage ist, sich in Bezug auf die Nabe (70) zu drehen,
eine Endfläche in der axialen Richtung des festen Zahnrads (11) oder des Leerlaufzahnrads (12) mit einem ersten Klauenzahn (13) versehen ist,
eine Endfläche in der axialen Richtung des Kupplungsrings (80) mit dem zweiten Klauenzahn (83) versehen ist, der mit dem ersten Klauenzahn (13) in Eingriff steht,
mindestens eines von der Nabe (70), dem Kupplungsring (80), dem festen Zahnrad (11) und dem Leerlaufzahnrad (12) einen Schuberzeugungsteil aufweist, der Schub in der axialen Richtung auf den Kupplungsring (80) ausübt, wenn der zweite Klauenzahn (83) mit dem ersten Klauenzahn (13) in Eingriff kommt, wobei der Schub einen anderen ersten Klauenzahn (13) und einen anderen zweiten Klauenzahn (83) voneinander trennt, und
wenn das maximale Drehmoment (Nm) der Antriebsquelle (S) als x eingestellt ist und das Trägheitsmoment (kgm²) der Reibungskupplung (110) als y eingestellt ist, y ≤ 6 x 10⁻⁶x erfüllt ist.

2. Kraftübertragungsvorrichtung (1) nach Anspruch 1, wobei die Reibungskupplung (110) eine nasse Mehrscheibenkupplung ist.

3. Kraftübertragungsvorrichtung (1) nach Anspruch 2, ferner umfassend ein erstes Gehäuse (7), in dem das Getriebe (2) untergebracht ist, und ein zweites Gehäuse (111), in dem die Reibungskupplung (110) untergebracht ist,
wobei das zweite Gehäuse (111) von dem ersten Gehäuse (7) getrennt ist.

4. Kraftübertragungsvorrichtung (1) nach Anspruch 2, ferner umfassend ein Gehäuse, in dem sowohl die Reibungskupplung (110) als auch das Getriebe (2) untergebracht sind.

## Revendications

1. Dispositif de transmission de puissance (1) comprenant :
un embrayage à friction (110) transmettant/interrompant la puissance entre un arbre d'entraînement (3) couplé à une source d'entraînement (S) et un premier arbre (4) ; et
une transmission (2) à laquelle la puissance est appliquée par le premier arbre (4),
où la transmission (2) a :
un deuxième arbre (5) disposé en parallèle au premier arbre (4) ;
un engrenage fixe (11) disposé sur l'un du premier arbre (4) ou du deuxième arbre (5) d'une manière relativement non rotative ;
un engrenage fou (12) disposé sur l'autre du premier arbre (4) ou du deuxième arbre (5) d'une manière relativement rotative ;
au moins deux moyeux de forme annulaire (70) couplés au premier arbre (4) ou au deuxième arbre (5) et agencés de manière adjacente à l'engrenage fou (12) ; et
un anneau d'embrayage (80) disposé sur la périphérie extérieure de chacun des moyeux (70) de manière à pouvoir se déplacer dans la direction axiale et de manière à ne pas pouvoir tourner par rapport au moyeu (70),
une face d'extrémité dans la direction axiale de l'engrenage fixe (11) ou de l'engrenage fou (12) est pourvue d'une première dent de crabot (13),
une face d'extrémité dans la direction axiale de l'anneau d'embrayage (80) est pourvue de la deuxième dent de crabot (83) qui vient en prise avec la première dent de crabot (13),
au moins l'un du moyeu (70), de l'anneau d'embrayage (80), de l'engrenage fixe (11) et de l'engrenage fou (12) a une partie de génération de poussée qui applique une poussée dans la direction axiale à l'anneau d'embrayage (80), lorsque la deuxième dent de crabot (83) vient en engagement avec la première dent de crabot (13), la poussée séparant une autre première dent de crabot (13) et une autre deuxième dent de crabot (83) l'une de l'autre, et
lorsque le moment d'une force maximale (Nm) de la source d'entraînement (S) est défini comme x et le moment d'inertie (kgm²) de l'embrayage à friction (110) est défini comme y, y ≤ 6 x 10⁻⁶x est satisfait.

2. Dispositif de transmission de puissance (1) selon la revendication 1, dans lequel l'embrayage à friction (110) est un embrayage multidisque humide.

3. Dispositif de transmission de puissance (1) selon la revendication 2, comprenant en outre un premier boîtier (7) dans lequel la transmission (2) est logée et un deuxième boîtier (111) dans lequel l'embrayage à friction (110) est logé,
où le deuxième boîtier (111) est séparé du premier boîtier (7).

4. Dispositif de transmission de puissance (1) selon la revendication 2, comprenant en outre un boîtier dans lequel à la fois l'embrayage à friction (110) et la transmission (2) sont logés.
